# EUROPÄISCHE PATENTSCHRIFT

(11) **EP 0 608 505 B1**
(45) Veröffentlichungstag und Bekanntmachung des Hinweises auf die Patenterteilung: **17.01.1996**
(21) Anmeldenummer: 93118814.8
(22) Anmeldetag: 23.11.1993
(51) Int. Cl.: C06C 9/00, C06B 29/20, C06B 31/22

(54) **Airbag-Gasgenerator mit einem Selbstzündmittel**
Gas generator for an airbag with an auto-ignition agent
Générateur de gaz pour un coussin gonflable avec un moyen d'auto-allumage

(30) Priorität: 23.01.1993 DE 4301794
(43) Veröffentlichungstag der Anmeldung: 03.08.1994
(73) Patentinhaber: TEMIC Bayern-Chemie Airbag GmbH, D-84544 Aschau (DE)
(72) Erfinder: Zeuner, Siegfried, Dr., D-81369 München (DE); Ruge, Hans-Peter, D-85591 Vaterstetten (DE); Neukirchinger, Peter, D-80637 München (DE)
(74) Vertreter: Maute, Hans-Jürgen, Dipl.-Ing.

(56) Entgegenhaltungen:
- EP-A- 0 482 755
- CH-A- 481 029
- DE-C- 308 538
- US-A- 1 464 012
- US-A- 3 182 595
- US-A- 3 856 590
- US-A- 4 858 951

## Beschreibung

Die Erfindung bezieht sich auf einen Airbag-Gasgenerator mit einem Selbstzündmittel nach dem Oberbegriff des Anspruchs 1.

Derartige Gasgeneratoren sind bekannt (vgl. US-A-4 561 675 und DE 39 14 690 A1). Bei Umgebungstemperaturen von etwa 150 bis 200° C, wie sie beispielsweise im Falle eines Brandes auftreten können, führt das Selbstzündmittel zum Zünden des Treibstoffs und damit zur Auslösung des Airbags. Bei diesen Temperaturen besitzt das im allgemeinen aus Aluminium o.dgl. Leichtbaumaterial bestehende Generatorgehäuse noch eine ausreichende Festigkeit. Eine Fragmentierung des Gehäuses bei der Airbag-Auslösung im Brandfall wird damit verhindert.

Als Selbstzündmittel werden nach der US-A-4 561 675 und DE 39 14 690 A1 Schießpulver, also Nitrozellulose ggf. in Verbindung mit anderen organischen Nitroverbindungen, verwendet.

Es besteht die Forderung, daß ein Airbag-Gasgenerator, einschließlich des Selbstzündmittels, bei einer Temperaturbelastung bis zu 110° C über einen Zeitraum von 400 Std. funktionsfähig bleibt. Solche Spitzentemperaturen können beispielsweise bei längerer Sonneneinstrahlung auftreten. Nitrozellulose wird bei langandauernder Erwärmung jedoch zersetzt. Die genannte Forderung wird daher von den bekannten Selbstzündmitteln nicht erfüllt.

Aufgabe der Erfindung ist es, ein Selbstzündmittel für Airbag-Gasgeneratoren bereitzustellen, das auch bei langandauernder Erwärmung auf relativ hohe Temperaturen stabil bleibt.

Dies wird erfindungsgemäß mit dem im Anspruch 1 gekennzeichneten Airbag-Gasgenerator erreicht. In den Unteransprüchen sind vorteilhafte Ausgestaltungen der Erfindung wiedergegeben.

Völlig überraschend wurde gefunden, daß die vorstehend genannte Forderung erfüllt wird, wenn der Nitrozellulose Kohlenstoff und ein mit Kohlenstoff reagierender anorganischer Oxydator zugesetzt wird. Der Anteil der Nitrozellulose in dem Selbstzündmittel liegt bei 20 bis 70 Gew.-%, vorzugsweise bei 30 bis 50 Gew.-%, insbesondere etwa 40 Gew.-%.

Als anorganische Oxydatoren können insbesondere Alkalinitrate, wie Kalium- oder Natriumnitrat eingesetzt werden. Ferner sind Alkalichlorate und -perchlorate als Oxydatoren verwendbar, desgleichen Peroxide, insbesondere Erdalkaliperoxide, wie Bariumperoxid.

Dem Kohlenstoff kommt eine wesentliche Bedeutung bei der Wärmestabilisierung der Nitrozellulose in dem erfindungsgemäßen Selbstzündmittel zu. Als Kohlenstoff kann fein zerkleinerte Kohle, wie Holzkohle, Ruß, oder dgl. kohlenstoffhaltiges pulverförmiges Material verwendet werden. Der Anteil des Kohlenstoffs in dem erfindungsgemäßen Selbstzündmittel soll mindestens 3 Gew.-% betragen, vorzugsweise liegt der Kohlenstoffanteil jedoch bei 5 bis 20 Gew.-%, bezogen auf das Gesamtgewicht des Selbstzündmittels. Neben Kohlenstoff können noch andere Brennstoffe, die mit dem anorganischen Oxydator umsetzbar sind, in dem Selbstzündmittel vorliegen, beispielsweise Schwefel oder organische Verbindungen, wie Zucker oder Zellulose.

Als besonders geeignet hat sich ein Selbstzündmittel herausgestellt, das aus einem Gemisch aus Nitrozellulose und schwefelfreiem Schwarzpulver besteht, wobei das Gewichtsverhältnis der Nitrozellulose zum schwefelfreien Schwarzpulver 0,5 : 1 bis 0,8 : 1 beträgt.

Das schwefelfreie Schwarzpulver besteht vorzugsweise aus 70 bis 85 Gew.-% Kaliumnitrat und 30 bis 15 Gew.-% Kohlenstoff, insbesondere etwa 80 Gew.-% Kaliumnitrat und etwa 20 Gew.-% Kohlenstoff.

Es ist jedoch auch schwefelhaltiges Schwarzpulver einsetzbar, das zu etwa 75 Gew.-% aus Kaliumnitrat, 10 Gew.-% Schwefel und 15 Gew.-% Kohlenstoff besteht. Das erfindungsgemäße Selbstzündmittel aus einem Gemisch aus Nitrozellulose, Kohlenstoff und einem Oxydator sowie ggf. einem weiteren Brennstoff für den anorganischen Oxydator (neben Kohlenstoff) läßt sich hervorragend zu Tabletten, Peletts o. dgl. stückige Körper pressen oder in anderer Weise formen.

Nachstehend ist die Erfindung anhand eines Vergleichsbeispiels und eines Beispiels näher erläutert.

### Vergleichsbeispiel:

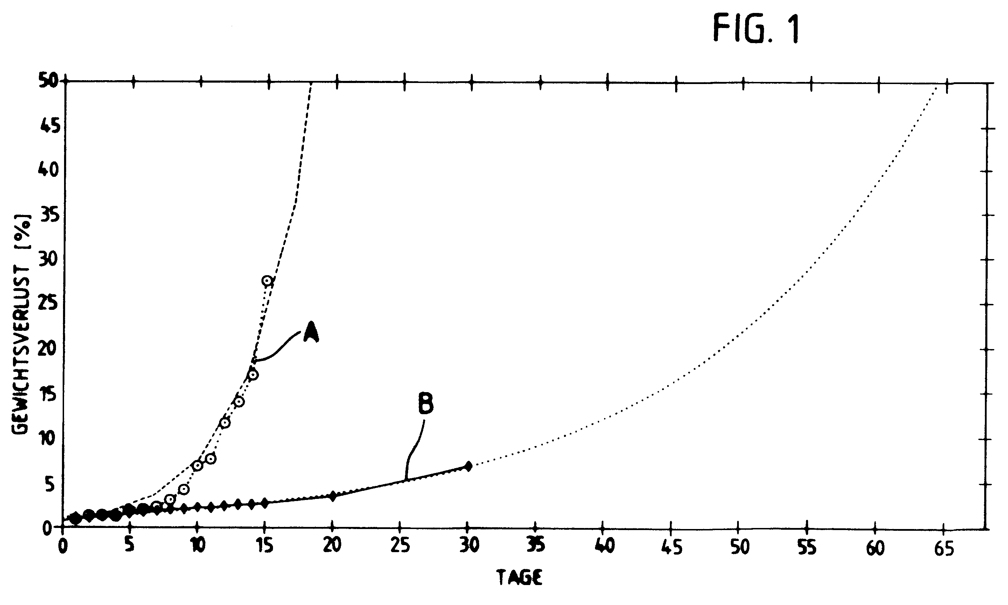

Einbasiges, reines Nitrozellulose-Pulver (= rauchloses Treibladungspulver) wird an der Luft bei 105° C gelagert. Der Gewichtsverlust der Nitrozellulose wird täglich gemessen. Die Ergebnisse dieser Messungen sind in dem beigefügten Diagramm (Fig. 1) als Kurve A dargestellt.

### Beispiel:

Das gleiche Nitrozellulosepulver wie im Vergleichsbeispiel wird mit schwefelfreiem Schwarzpulver (mit der Zusammensetzung 80 Gew.-% Kaliumnitrat und 20 Gew.-% Kohlenstoff) im Verhältnis 0,66 : 1 vermischt. Das Gemisch wird an der Luft bei 105° C gelagert und der Gewichtsverlust täglich gemessen. Die Meßergebnisse sind in dem beigefügten Diagramm (Fig. 1) durch die Kurve B dargestellt.

Wie aus dem Diagramm hervorgeht, beträgt der Gewichtsverlust der reinen Nitrozellulose (Kurve A) durch Bildung gasförmiger Zersetzungsprodukte nach 15 Tagen (360 Std.) bereits etwa 30 % und nach 17 Tagen (408 Std.) sogar schon etwa 50 %. Das heißt, die Funktionsfähigkeit eines Gasgenerators mit Nitrozellulose als Selbstzündmittel nimmt sehr schnell ab. Demgegenüber ist bei dem erfindungsgemäßen Selbstzündmittel selbst nach 30 Tagen (720 Std.) Erwärmung auf 105° C erst ein Gewichtsverlust von etwa 7 % eingetreten. Das heißt, bei einem Gasgenerator mit dem erfindungsgemäßen Selbstzündmittel ist die Funktionsfähigkeit auch nach einem so langen Zeitraum bei einer Temperatur von 105°C noch sicher gewährleistet.

Das erfindungsgemäße Selbstzündmittel wird vorzugsweise in Form von Tabletten, Peletts oder in Form anderer stückiger Körper eingesetzt. Die Tabletten können dabei an unterschiedlichen Stellen im Gasgenerator angeordnet werden.

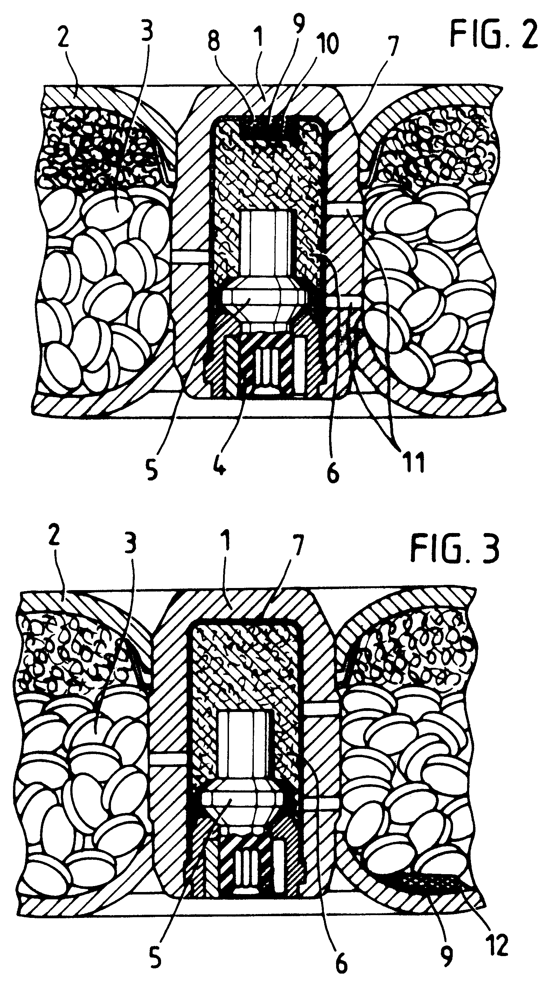

Nachstehend sind zwei Ausführungsformen von Airbag-Gasgeneratoren anhand der Zeichnung näher erläutert, bei denen die Selbstzündmitteltabletten an verschiedenen Stellen angeordnet sind. Dabei zeigen
- Fig. 2 und 3: jeweils einen Schnitt durch zwei verschiedene Ausführungsformen des Gasgenerators in teilweiser Wiedergabe.

Gemäß Fig. 2 weist der Gasgenerator ein Zentralrohr 1 auf, um das sich ein torusförmiges Brennkammergehäuse 2 erstreckt, das mit Treibstoffpellets 3 gefüllt ist. Im Zentralrohr 1 ist auf dem Anzündträger 4 ein elektrischer Anzünder 5 montiert, der in eine Verstärkerladung 6 ragt, die in einer Hülse 7 angeordnet ist. An ihrer von dem Anzünder 5 abgewandten Stirnseite ist die Hülse 7 mit einer Vertiefung 8 versehen, in der das als Tablette 9 ausgebildete Selbstzündmittel angeordnet ist. Der Boden 10 der Vertiefung 8 ist als Berstmembran ausgebildet. Das Innere des Zentralrohrs 1 ist mit dem Inneren des Brennkammergehäuses 2 durch Kanäle 11 verbunden.

Im Falle einer übermäßigen Erhitzung des Brennkammergehäuses 1 und des Zentralrohrs 2 kommt es zu einer Selbstentzündung des Selbstzündmaterials 9, wodurch nach Öffnen der Berstmembran 10 eine Überzündung der Verstärkerladung 6 erfolgt und damit der Treibstoff 3 initiiert wird.

Die Ausführungsform des Gasgenerators nach Fig. 3 unterscheidet sich von derjenigen nach Fig. 2 im wesentlichen nur dadurch, daß das als Tablette 9 ausgebildete Selbstzündmittel, z.B. mit einem geeigneten Klebstoff 12 an der Innenseite des Brennkammergehäuses 2 befestigt ist.

Im Falle einer übermäßigen Erhitzung des Brennkammergehäuses 1 kommt es zu einer Selbstzündung des Selbstzündmittels 9, so daß eine Überzündung auf den Treibstoff 3 stattfindet. Durch die Treibstoffverbrennung wird auch noch die Verstärkerladung 6 sowie der elektrische Anzünder 5 initiiert, so daß nach Brennschluß ein völlig inerter Gasgenerator vorliegt.

Die Ausführungsform nach Fig. 3 mit an der Innenseite des Brennkammergehäuses angeordneter Selbstzündmittel-Tablette ist insbesondere auch für lange Rohrgeneratoren geeignet. Wenn in einem solchen Rohrgenerator das Selbstzündmittel (nur) an der Anzündeinheit vorgesehen ist, die von einer Stirnseite axial in das rohrförmige Brennkammergehäuse ragt, wird das Selbstzündmittel nämlich dann nicht gezündet, wenn die Erwärmung des Brennkammergehäuses nur auf der von der Anzündeinheit abgewandten Seite erfolgt. Wenn hingegen mehrere Selbstzündmittel-Tabletten verteilt an der Innenwand des Brennkammergehäuses befestigt sind, erfolgt eine Auslösung des Airbags auch bei nur lokaler Erwärmung des Gehäuses.

## Patentansprüche

1. Airbag-Gasgenerator mit einem Selbstzündmittel, das bei einer Temperatur zündet, die deutlich über der normalen Umgebungstemperatur, aber wesentlich unter der Zündtemperatur des Treibstoffs liegt, **dadurch gekennzeichnet**, daß das Selbstzündmittel (9) aus einem Gemisch aus Nitrozellulose, einem anorganischen Oxydator, Kohlenstoff und ggf. einem weiteren Brennstoff für den anorganischen Oxydator besteht, wobei der Anteil der Nitrozellulose 20 bis 70 Gew.-% und der Anteil des Kohlenstoffs mindestens 3 Gew.-% beträgt.

2. Gasgenerator nach Anspruch 1, **dadurch gekennzeichnet**, daß der Anteil der Nitrozellulose im Selbstzündmittel (9) 30 bis 50 Gew.-% beträgt.

3. Gasgenerator nach Anspruch 1 oder 2, **dadurch gekennzeichnet,** daß der Anteil des Kohlenstoffs im Treibmittel 5 bis 20 Gew.-% beträgt.

4. Gasgenerator nach einem der vorstehenden Ansprüche, **dadurch gekennzeichnet**, daß der Oxydator ein Alkali- oder Erdalkalinitrat, -chlorat, -perchlorat oder -peroxid ist.

5. Gasgenerator nach einem der vorstehenden Ansprüche, **dadurch gekennzeichnet**, daß der Oxydator Kaliumnitrat ist und der Anteil des Kaliumnitrats, bezogen auf das Gemisch aus Kaliumnitrat, Kohlenstoff und dem weiteren Brennstoff 70 bis 85 Gew.-% beträgt.

6. Gasgenerator nach einem der vorstehenden Ansprüche, **dadurch gekennzeichnet**, daß das Selbstzündmittel (9) als Tablette ausgebildet ist.

7. Gasgenerator nach Anspruch 6, **dadurch gekennzeichnet,** daß das Selbstzündmittel (9) an der Innenseite des Brennkammergehäuses (1) angebracht ist.

## Claims

1. Airbag gas generator including a self-priming means which ignites at a temperature that is distinctly above the normal ambient temperature but substantially below the ignition temperature of the propellant, characterised in that, the self-priming means (9) consists of a mixture of nitrocellulose, an inorganic oxidising agent, carbon and possibly a further fuel material for the inorganic oxidising agent, wherein the proportion of nitrocellulose amounts to 20 to 70 % by weight and the proportion of carbon amounts to at least 3 % by weight.

2. Gas generator in accordance with Claim 1, characterised in that, the proportion of nitrocellulose in the self-priming means (9) amounts to 30 to 50 % by weight.

3. Gas generator in accordance with Claim 1 or 2, characterised in that, the proportion of carbon in the propellant amounts to 5 to 20 % by weight.

4. Gas generator in accordance with any of the preceding Claims, characterised in that, the oxidising agent is an alkaline or alkaline earth, nitrate, chlorate, perchlorate or peroxide.

5. Gas generator in accordance with any of the preceding Claims, characterised in that, the oxidising agent is potassium nitrate and the proportion of potassium nitrate amounts to 70 to 85 % by weight based on the mixture of potassium nitrate, carbon and the further fuel material.

6. Gas generator in accordance with any of the preceding Claims, characterised in that, the self-priming means (9) is in the form of tablets.

7. Gas generator in accordance with Claim 6, characterised in that, the self-priming means (9) is mounted on the inner surface of the combustion chamber housing (1).

## Revendications

1. Générateur de gaz pour coussin gonflable présentant un moyen d'autoallumage qui s'allume à une température qui est nettement supérieure à la température ambiante normale mais qui est essentiellement inférieure à la température d'allumage du combustible, caractérisé en ce que le moyen d'autoallumage (9) est constitué d'un mélange de nitrocellulose, d'un oxydant inorganique, de carbone et éventuellement d'un autre combustible pour l'oxydant inorganique, la part de la nitrocellulose étant de 20 à 70 % en poids et la part du carbone d'au moins 3 % en poids.

2. Générateur de gaz selon la revendication 1, caractérisé en ce que la part de la nitrocellulose dans le moyen d'autoallumage (9) est de 30 à 50 % en poids.

3. Générateur de gaz selon la revendication 1 ou 2, caractérisé en ce que la part du carbone dans le moyen d'autoallumage (9) est de 5 à 20 % en poids.

4. Générateur de gaz selon l'une quelconque des revendications précédentes, caractérisé en ce que l'oxydant est un nitrate, chlorate, perchlorate ou peroxyde alcalin ou alcalino-terreux.

5. Générateur de gaz selon l'une quelconque des revendications précédentes, caractérisé en ce que l'oxydant est le nitrate de potassium et la part du nitrate de potassium, rapportée au mélange constitué de nitrate de potassium, de carbone et de l'autre combustible est de 70 à 85 % en poids.

6. Générateur de gaz selon l'une quelconque des revendications précédentes, caractérisé en ce que le moyen d'autoallumage (9) est dans la forme de pastilles.

7. Générateur de gaz selon la revendication 6, caractérisé en ce qu'on amène le moyen d'autoallumage (9) sur le côté interne du boîtier de la chambre de combustion (2).
